# EUROPÄISCHE PATENTSCHRIFT

(11) **EP 0 644 861 B1**
(45) Veröffentlichungstag und Bekanntmachung des Hinweises auf die Patenterteilung: **01.10.1997**
(21) Anmeldenummer: 93912885.6
(22) Anmeldetag: 04.06.1993
(51) Int. Cl.: C04B 28/26, C04B 18/28, C04B 38/00

(54) **DÄMMSTOFF AUF BASIS VON ALTROHSTOFFEN UND FASERIGEN ROHSTOFFEN SOWIE VERFAHREN ZU DESSEN HERSTELLUNG**
INSULATING MATERIAL BASED ON USED RAW MATERIALS AND ON FIBROUS RAW MATERIALS, AND PROCESS FOR PRODUCING THE SAME
MATERIAL ISOLANT A BASE DE MATIERES PREMIERES DE RECUPERATION ET DE MATIERES PREMIERES FIBREUSES, ET SON PROCEDE DE PRODUCTION

(30) Priorität: 05.06.1992 DE 4218549; 27.05.1993 DE 4317575
(43) Veröffentlichungstag der Anmeldung: 29.03.1995
(73) Patentinhaber: GOTTHARDT, Thieme, D-01445 Radebeul (DE)
(72) Erfinder: GOTTHARDT, Thieme, D-01445 Radebeul (DE)
(74) Vertreter: Uhlemann, Henry, Dipl. Chem.
(86) Internationale Anmeldenummer: EP9301413
(87) Internationale Veröffentlichungsnummer: WO9325492

(56) Entgegenhaltungen:
- EP-A- 0 064 947
- WO-A-81/01283
- WO-A-86/03505
- AT-A- 364 304
- DE-A- 3 334 118
- DE-U- 9 105 603
- FR-A- 1 462 324
- GB-A- 2 073 167
- US-A- 4 994 113
- CHEMICAL ABSTRACTS, vol. 110, no. 11, 29. Mai 1989, Columbus, Ohio, US; abstract no. 198259x, D. A. VAN RHYN Seite 349 ; see abstract & ZA, A, 8 700 036 (ID.)
- CHEMICAL ABSTRACTS, vol. 112, no. 12, 19. Marz 1990, Columbus, Ohio, US; abstract no. 103997r, D. A. VAN RHYN Seite 332 ; see abstract & ZA, A, 8 807 767 (ID.)

## Beschreibung

Die Erfindung betrifft einen Dämmstoff auf Basis von Altrohstoffen und faserigen Rohstoffen sowie ein Verfahren zu dessen Herstellung. Derartige Dämmstoffe sind als Füll-, Dämm-, Konstruktions- und/oder Isolationsmaterial im Bau- und Verpackungswesen, als Dämmmaterial-Formteile, Ortschaum und Verpackungsmaterial anwendbar.

Bekannt sind Verfahren zur Herstellung von Dämmaterialien aus Altpapier und/oder Pappe, bei denen das Ausgangsmaterial zerkleinert, mit Zusatzstoffen vermischt und anschließend einem Formgebungsprozeß unterworfen wird. So wird in der DE-OS 34 20 195 ein derartiges Verfahren beschrieben, bei dem nach Zerkleinerung des Ausgangsstoffes Biopolymere oder Kunststoffe beigemischt werden. Durch Plastifizieren bzw. Flüssigkeitsverdampfung dieser Masse wird ein formbarer Dämmstoff erzielt. Neben einem hohen Energieaufwand bei dieser Verarbeitung, sind zur Erreichung einer Feuer- und Feuchtigkeitsresistenz weitere Zusätze bzw. eine nachfolgende Oberflächenbehandlung erforderlich. Beim nach DE-OS 33 07 736 hergestellten Dämmstoff, in dem Emulgatoren als Zusatzstoffe verarbeitet sind, ist nach mechanischer Verschäumung eine Verfestigung des Dämmstoffes durch Aufsprühen von Oberflächenleim beispielsweise notwendig.

Bekannt ist auch die Herstellung von Formkörpern aus hauptsächlich Wasserglasschaum mit einem geringen Anteil unterschiedlicher Füllstoffe. Das Aufschäumen erfolgt dabei durch chemische Treibmittel oder durch Einbringen von Gasen, wie Luft oder Dampf. Da gerade beim Einsatz von Härtern sich bereits beim Vermischen der Aufbaukomponenten gallertartige Ausscheidungen bilden, die zu Problemen bei der Herstellung der Schaumstoffe führen, sind in der Literatur eine Vielzahl von Zusatzstoffen beschrieben. Dabei handelt es sich teilweise um speziell dem jeweiligen Herstellungsprozeß angepaßte, umfangreiche chemische Zusammensetzungen, wie z. B. in der DE-OS 32 27 580 beschrieben. Zusätze von Carbonsäurekohlensäureesteranhydriden nach DE-OS 21 57 371 in definierter Zusammensetzung sollen eine anwendungsspezifische Verarbeitungszeit gewährleisten. Dabei muß jedoch die Feuchtigkeitsbeständigkeit des mit anorganischen bzw. organischen Beimengungen gebildeten Formstoffes kritisch bewertet werden. Der Einbau von Natur latex-Dispersionen in den Wasserglasschaum nach DE-OS 30 45 404 soll dagegen die Verarbeitbarkeit als auch die Eigenschaften der hergestellten Formkörper verbessern. Anorganische Füllstoffe, auch in faseriger Form, können nach dieser Lösung nur in geringem Umfang verarbeitet werden und müssen genau definierte Eigenschaften aufweisen. Des weiteren schließt sich an die Bildung des Schaumstoffes ein längerer, energieaufwendiger Trocknungsprozeß an.

Aus der DD-PS 67 347 ist ein Baukörper aus cellulosehaltigen Abfallstoffen und anorganischen Bindemitteln bekannt, der als Ausgangsmaterial hauptsächlich Holzabfälle verwendet und auf diese Anwendung ausdrücklich ausgerichtet ist. Aufgrund der bindewidrigen Ausgangsstoffe ist dabei eine aufwendige Vorbehandlung mittels exothermer und zeitlich lang andauernder Lagerung notwendig, die einen praktischen Einsatz zur Herstellung von Baumaterialien erschwert. Auch wenn mit dieser Lösung bislang ungenutzte Frischholzabfälle einer ökologischen Verwertung zugeführt werden, eignet sich die mit dieser Lösung vorgeschlagene Technologie nicht zur Verarbeitung von Papier- und Pappabfällen sowie textiler Fasern. Das vorgeschlagene Verfahren würde zum Zerfall und zu einer teilweisen Kompostierung derartiger Abfall- und Faserstoffe führen.

In der DE-OS 19 60 059 ist ein Verbundstoff beschrieben, der im wesentlichen aus einer silikathaltigen Verbundbeschichtung von Faserbahnenmaterial besteht. An die Struktur, Länge und Oberflächengüte der Ausgangsstoffe werden dabei ganz definierte Forderungen gestellt, so daß diese Lösung die Verwendung von Abfällen, speziell von Altpapierabfällen, ausschließt.

Ferner sind aus US-A-4 994 113 Platten bekannt, die aus ca. 60 Gew. T. Zelluloseabfällen und ca 40 Gew. T. Wasserglas und Hilfsstoffen hergestellt werden.

Aufgabe der Erfindung ist daher, einen aus Altrohstoffen bestehenden Dämmstoff mit weitem Anwendungsbereich zu schaffen. der zudem mit geringem verfahrenstechnischen und energetischen Aufwand ökologisch herstellbar ist. Dieser Stoff soll gleichzeitig eine problemlose Entsorgung nach Verbrauch ermöglichen, das heißt, in den natürlichen Kreislauf rückführbar sein.

Zur Lösung dieser Aufgabe ist der erfindungsgemäße Dämmstoff im wesentlichen aus
- 50-70 %: zerkleinertem Holz oder Gräsern oder zerfasertem Altpapier und/oder zerfaserter Pappe mit einem Anteil von 0 - 30% textiler, pflanzlicher oder anorganischer Fasern oder zerkleinertem Holz und zerfasertem Altpapier und/oder zerfaserter Pappe mit einem Anteil von 0 - 30% textiler, pflanzlicher oder anorganischer Fasern, wobei zerkleinerstes Holz oder Gräser als mit Kalkmilch und Wasserglaslösung getränkte Produkte vorliegen,
- 20-50 %: Alkalisilikat, bezogen auf die Gesamtmasse des Dämmstoffes, zusammengesetzt, wobei der Rest aus
- 0-30 %: Hilfsstoffen bezogen auf die Gesamtmasse des Dämmstoffes besteht und der Dämmstoff verschäumt ist.

Die textilen, pflanzlichen oder organischen Fasern weisen vorzugsweise eine Länge von 10 ... 30 mm auf. Neben zerkleinertem Holz können auch zerkleinerte Holzabfälle, Sägespäne, zerkleinerter Windbruch, zerkleinerte Industrieholzabfälle, sowie zerkleinerte Gräser, z. B. in Form von Bambus oder Stroh verwendet werden. Ebenso können Gemische der vorstehend genannten Stoffe eingesetzt werden. Hilfsstoffe sind je nach Anwendungszweck Kalziumoxid, Zement, Quarzmehl, Kasein, Farbstoff oder Kalkmilch.

Die Herstellung des Dämmstoffes erfolgt erfindungsgemäß derart, daß 50 - 70 %, bezogen auf die Gesamtmasse des Endproduktes, zerfasertes Altpapier und/oder zerfaserte Pappe einschließlich eines Anteiles von 0 -30 % Fasern mit einer wäßrigen Lösung aus Wasserglas mit einem Feststoffgehalt von 20 -50 %, bezogen auf die Gesamtmasse des Endproduktes, vermischt werden. Entsprechend Anwendungszweck erfolgt die Zugabe der Hilfsstoffe zu dieser Mischung mit einem Anteil von 0 - 30 %, bezogen auf die Gesamtmasse des Endproduktes. Die derartig hergestellte, gießfähige Masse wird mittels Luft und/oder CO₂ verschäumt. Zur Beschleunigung der Aushärtung kann unmittelbar dem Schaum oder nach dem Ausformen der gießfähigen Masse oder des Schaumes eine organische Säure, vorzugsweise Essigsäure, zugesetzt werden. Die derart hergestellten Dämmstoffe werden einem gesonderten Trocknungsprozeß unterzogen.

Erfindungsgemäß eignet sich aucn zerkleinertes Holz zur Herstellung der Dämmstoffe. Neben zerkleinertem Holz können dabei auch zerkleinerte Holzabfälle, Sägespäne, zerkleinerter Windbruch, zerkleinerte Industrieholzabfälle, sowie zerkleinerte Gräser, z. B. in Form von Bambus oder Stroh verwendet werden. Ebenso können Gemische der vorstehend genannten Stoffe eingesetzt werden.

Da bislang bekannte Verfahren eine Verarbeitung von zerkleinertem Holz sowie den anderen aufgeführten Stoffen mit Wasserglas kaum bzw. nur unter großem Aufwand erlauben, ist es erforderlich, diese Stoffe vor der vorgenannten Verarbeitung einer gesonderten Verarbeitung zu unterziehen.

Dazu werden das Holz oder auch bereits vorzerkleinertes Holz oder die oben aufgeführten Stoffe nach bekannten Verfahren zu feinem Sägemehl oder feinfasrigem Schliff (vergleichbar mit der Papierherstellung) verarbeitet. Das so zerkleinerte Material wird vorgetrocknet, danach in einem Kessel mit Rührwerk auf 50 bis 90 °C erwärmt und einem Vakuum ausgesetzt. Dabei werden ein großer Rest an Feuchtigkeit, aber auch Gase aus dem Sägemehl/Schliff ausgetrieben.

Danach versetzt man das so behandelte, zerkleinerte Material unter Druck mit einem Gemisch aus Kalkmilch und Wasserglaslösung. Dabei wird ein Gemisch mit einem Verhältnis Kalkmilch zu Wasserglaslösung von 1:1 bis 1:4, bezogen auf den Feststoffgehalt beider Anteile, angewandt. Vorzugsweise sollte das Gemisch eine Temperatur von 10 bis 30°C haben. In der Menge wird das Gemisch Kalkmilch/Wasserglaslösung so angewandt, daß eine ausreichende Tränkung des zerkleinerten Materials ermöglicht wird. Die in dem so behandelten, zerkleinerten Material enthaltene Wasserglaslösung wird dem Gesamtanteil Wasserglaslösung und der Kalkmilchanteil dem Gesamtanteil Hilfsstoffe des Endproduktes, jeweils bezogen auf den Feststoffgehalt beider Bestandtelle, angerechnet.

Durcn das tiefe Eindringen dieses Gemisches in die Materialfasern wird insbesondere aufgrund des Kalkmilchanteiles eine Neutralisierung der bindewidrigen Schutz- und Inhaltsstoffe des zerkleinerten Materials erreicht. Die so entstandene Masse kann im feuchten Zustand wie vorgenannt allein mit dem noch notwendigen Anteil Wasserglaslösung und den gegebenenfalls zuzusetzenden Hilfsstoffen vermischt und weiterverarbeitet werden. Möglich ist aber auch die Zugabe der feuchten Masse zu zerfasertem Altpapier bzw. zerfaserter Pappe und deren anschließende Weiterverarbeitung mit dem noch notwendigen Anteil Wasserglaslösung und den gegebenenfalls zuzusetzenden Hilfsstoffen wie vorgenannt, wobei der Gehalt an Wasserglaslösung bzw. Kalkmilch des zerkleinerten Materials dem Gesamtanteil der zuzusetzenden Wasserglaslösung bzw. der Hilfsstoffe, bezogen auf ihren Feststoffgehalt, anzurechnen ist.

Danach wird die hergestellte gießfähige Masse aus den erfindungsgemäßen Bestandteilen mittels Luft und/oder CO₂ verschäumt und anschließend einem Trocknungsprozess unterzogen.

Der erfindungsgemäß hergestellte Dämmstoff kann nachträglich in seinen Eigenschaften durch Beschichten oder Laminieren variiert werden. Möglich ist aber auch, dessen Festigkeit durch Einlagerung von druck- oder zugaufnehmenden Elementen zu erhöhen.

Anhand nachfolgender Ausführungsbeispiele wird die Erfindung näher erläutert:

### Ausführungsbeispiele 1 und 2:

Altpapier oder Pappe werden durch Aufraspeln mit einer Raspelscheibe/-trommel (Raspelnoppen 3 - 6 mm) in eine feinfasrige, wattige Form gebracht und mit nach bekannten Verfahren zerfaserten Lumpen mit einer Faserlänge von 10 - 30 mm gemischt. Dieses Fasergemisch wird nachfolgend in einem Rührwerk oder Mischer mit Wasserglas und CaO gemischt. Dabei betragen die Anteile der Mischung:

| | Dämmstoff 1 | Dämmstoff 2 |
|---|---|---|
| Altpapier/Pappe | 180 g | 200 g |
| zerfaserte Lumpen | 20 g | - |
| Wasserglas (Feststoffgehalt) | 180 g | 180 g |
| CaO | 20 g | - |
| Zement PZ 37 | - | 20 g |

Wenn erforderlich, kann der Mischung Wasser und eventuell ein Schaummittel hinzugefügt werden, um zur besseren Verarbeitbarkeit eine dickbreiige Konsistenz zu erreichen.

Das fertige Gemisch wird in einem Extruder verdichtet und einem mit Luft und/oder CO₂ beaufschlagten Schaumkopf zur mechanischen Verschäumung zugeführt. Der entstandene Schaum wird auf einem Band abgeschieden und mit Essigsäure versetzt, daß entsprechend Bandgeschwindigkeit und Schaumauftag sich in gewünschten Dicken plattenförmige Körper bilden, die dann einer Trocknung zugeführt werden. Die so hergestellten Schaumstoffe weisen folgende Eigenschaften auf:

| | Dämmstoff 1 | Dämmstoff 2 |
|---|---|---|
| Dichte | 0,27 gcm⁻³ | 0,27 gcm⁻³ |
| Belastbarkeit | 4 kgcm⁻² | 4 kgcm⁻² |
| Formstabilität bei Wässern | > 48 h | > 48 h |

Untersuchungen zur Feuerresistenz ergaben, daß die Dämmstoffe 1 und 2 einer direkten Flammeneinwirkung einer Stadtgasflamme über 3 min widerstanden, ohne zu brennen. Bei den Brennversuchen zeigte sich lediglich eine geringe Rauchgasentwicklung und im Bereich der Kernflamme traten Glasverschmelzungen mit leichten Randverkohlungen auf.

Statt der Hilfsstoffe CaO oder Zement können auch Quarzmehl, insbesondere zur Verbesserung der Schaumbildung, Kasein zur Erhöhung der Feuchtigkeitsbeständigkeit oder Farbstoff zur Farbgebung zugesetzt werden. Als textile Fasern eignen sich zerfaserte Lumpen, Glasfasern oder auch pflanzliche Fasern in Form von Gras, Stroh, Leinen usw.

Entsprechend Anwendungszweck können diese Schaumstoffe mit wetterschützenden Schichten aus Kalk-/Zementmörtel versehen werden, einen Farbanstrich erhalten oder mit Alufolie kaschiert werden.

Eine thermische Oberflächenbehandlung bis zur Verkohlung erreicht je nach Grad der Wärmebehandlung einen höheren Schutz gegen Feuchtigkeit und biologischen Befall.

### Ausführungsbelspiele 3 und 4:

Vorgetrocknete Frischholzabfälle werden zu einem feinfasrigen Schliff nach bekannten Verfahren geschliffen. Dieser Schliff wird in einem Kessel mit Rührwerk auf ca. 70 °C erwärmt und einem Vakuum ausgesetzt. Die Vakuumbehandlung wird bis zum Abschluß der Ausgasung des geschliffenen Holzes durchgeführt. Anschließend gibt man dem so behandelten Holz ein Gemisch aus Kalkmilch und Wasserglaslösung unter Druck zu. Dabei wird ein Gemisch mit einem Verhältnis Kalkmilch zu Wasserglaslösung von 1:2, bezogen auf den Festtoffgehaft beider Anteile, angewandt. Das Gemisch hat eine Temperatur von 20 °C, in der Menge wird das Gemisch Kalkmilch/Wasserglaslösung so verwendet, daß eine ausreichende Tränkung des zerkleinerten Holzes ermöglicht wird.

Die Druckimprägnierung erfolgt maximal 10 Minuten. Danach wird die feuchte Masse entweder allein mit Zusatzstoffen versetzt oder mit zerkleinertem Altpapier/Pappe oder zerfaserten Lumpen entsprechend der Zusammensetzung des Dämmstoffes gemischt.

Die in dem behandelten, zerkleinerten Holz enthaltene Wasserglaslösung wird dem Gesamtantell der Wasserglaslösung und der Kalkmilchanteil dem Gesamtantell Hilfsstoffe des Endproduktes, jeweils bezogen auf den Feststoffgehalt beider Bestandteile, angerechnet.

Beispielhaft sind 2 Dämmstoffe in ihren Ausgangsbestandteilen angegeben:

| | Dämmstoff 3 | Dämmstoff 4 |
|---|---|---|
| Frischholzschliff | 300 g | 200 g |
| Wasserglas (Feststoffgehalt) | 300 g | 420 g |
| Altpapier/Pappe | - | 200 g |
| zerfaserte Lumpen | - | 40 g |
| Kalkmilch (Feststoffgehalt) | 50 g | 50 g |
| Zement PZ 37 | - | 30 g |
| Quarzmehl | 100 g | - |

Die Weiterverarbeitung erfolgt nach Beispiel 1 und 2, d.h. wenn erforderlich, kann der Mischung Wasser und eventuell ein Schaummittel hinzugefügt werden, um zur besseren Verarbeitbarkeit eine dickbreiige Konsistenz zu erreichen.

Das fertige Gemisch wird in einem Extruder verdichtet und einem mit Luft und/oder CO₂ beaufschlagten Schaumkopf zur mechanischen Verschäumung zugeführt. Der entstandene Schaum wird auf einem Band abgeschieden und mit Essigsäure versetzt. Dabei wird die Bandgeschwindigkeit so eingestellt, daß sich bei gleichmäßigem Schaumauftrag plattenförmige Körper in den gewünschten Dicken bilden, die dann einer Trocknung zugeführt werden.

### Ausführungsbeispiel 5

Stroh wird zu einem feinfasrigen Schliff nach bekannten Verfahren gemahlen. Das gemahlene Stroh wird dann analog Ausführungsbeispiel 1 und 2 weiterverarbeitet. Dabei betragen die Anteile der Mischung:

| | Dämmstoff 5 |
|---|---|
| gemahlenes Stroh | 300 g |
| Wasserglas (Feststoffgehalt) | 300 g |
| Altpapier/Pappe | 150 g |
| Kalkmilch (Feststoffgehalt) | 50 g |
| Quarzmehl | 100 g |

Die nach den Ausführungsbeispielen 3, 4 und 5 hergestellten Schaumstoffe weisen folgende Eigenschaften auf:

| Dämmstoff | 3 | 4 | 5 |
|---|---|---|---|
| Dichte (gcm⁻³) | 0,32 | 0,30 | 0,30 |
| Belastbarkeit (kgcm⁻²) | 4 | 4 | 4 |
| Formstabilität bei Wässern | > 48 h | > 48 h | > 48 h |

## Patentansprüche

1. Dämmstoff auf Basis von Altrohstoffen und faserigen Rohstoffen, dadurch gekennzeichnet, daß er aus
50-70 % zerkleinertem Holz oder Gräsern oder zerfasertem Altpapier und/oder zerfaserter Pappe mit einem Anteil von 0-30% textiler, pflanzlicher oder anorganischer Fasern oder zerkleinertem Holz und zerfasertem Altpapier und/oder zerfaserter Pappe mit einem Anteil von 0-30% textiler, pflanzlicher oder anorganischer Fasern, wobei zerkleinertes Holz oder Gräser als mit Kalkmilch und Wasserglaslösung getränkte Produkte vorliegen
20-50 % Alkalisilikat, bezogen auf die Gesamtmasse des Dämmstoffes, zusammengesetzt ist,
wobei der Rest aus
0-30 % Hilfsstoffen, bezogen auf die Gesamtmasse des Dämmstoffes, besteht und der Dämmstoff verschäumt ist.

2. Dämmstoff nach Anspruch 1, dadurch gekennzeichnet, daß als zerkleinertes Holz zerkleinerte Holzabfälle oder Sägespäne oder zerkleinerter Windbruch oder zerkleinerte Industrieholzabfälle oder zerkleinertes Bambus oder Stroh oder Gemische der vorstehend genannten Stoffe eingesetzt werden.

3. Dämmstoff nach Anspruch 1, dadurch gekennzeichnet, daß als Hilfsstoffe Kalziumoxid, Zement, Quarzmehl, Kasein, Farbstoffe oder Kalkmilch eingesetzt werden.

4. Dämmstoff nach Anspruch 1, dadurch gekennzeichnet, daß die textilen, pflanzlichen oder anorganischen Fasern eine Länge von 10 ... 30 mm aufweisen und aus zerfaserten Lumpen, Stroh, Gräsern oder Glasfasern bestehen.

5. Verfahren zur Herstellung von Dämmstoff nach Anspruch 1, dadurch gekennzeichnet, daß 50 - 70 % bezogen auf die Gesamtmasse des Endproduktes zerfasertes Altpapier und/oder zerfaserte Pappe einschließlich eines Anteiles von 0 - 30 % Fasern mit einer Wasserglaslösung mit einem Feststoffgehalt von 20 ... 50 % bezogen auf die Gesamtmasse des Endproduktes vermischt, dieser Mischung entsprechend Anwendungszweck gegebenenfalls die Hilfsstoffe mit einem Anteil von 0 ... 30 % bezogen auf die Gesamtmasse zugegeben werden und die derart hergestellte gießfähige Masse mittels Luft und/oder CO₂ verschäumt und anschließend einem Trocknungsprozeß unterzogen wird.

6. Verfahren zur Herstellung von Dämmstoff nach Anspruch 1, dadurch gekennzeichnet, daß
nach bekannten Verfahren feinzerkleinertes Holz oder feinzerkleinerte Holzabfälle oder Sägespäne oder feinzerkleinerter Windbruch oder feinzerkleinerte Industrieholzabfälle oder feinzerkleinerte Gräser (Bambus, Stroh) oder Gemische der vorstehend genannten Stoffe vorgetrocknet, danach einem Vakuum bei 50 bis 90 °C ausgesetzt, anschließend mit einer Mischung aus Kalkmilch und Wasserglaslösung mit einem auf der Feststoffgehalt bezogenen Verhältnis von Kalkmilch zu Wasserglaslösung von 1:1 bis 1 : 4 unter Druck versetzt werden,
die so entstandene feuchte Mischung entweder allein oder im Gemisch mit zerkleinertem Altpapier und/oder zerkleinerter Pappe mit einem Anteil textiler, pflanzlicher oder anorganischer Fasern mit einer Wasserglaslösung vermischt wird und dieser Mischung entsprechend Anwendungszweck gegebenenfalls weitere Hilfsstoffe zugegeben werden,
wobei die in dem behandelten, zerkleinerten Material enthaltene Wasserglaslösung dem Gesamtanteil Wasserglaslösung und der Kalkmilchanteil dem Gesamtanteil Hilfsstoffe des Endproduktes, jeweils bezogen auf den Feststoffgehalt beider Bestandteile, angerechnet werden,
und die derart hergestellte gießfähige Masse mittels Luft und/oder CO₂ verschäumt und anschließend einem Trocknungsprozeß unterzogen wird.

7. Verfahren zur Herstellung von Dämmstoff nach Anspruch 5 und 6, dadurch gekennzeichnet, daß zur Beschleunigung der Aushärtung unmittelbar dem Schaum oder nach dem Ausformen der gießfähigen Masse oder des Schaumes eine organische Säure, vorzugsweise Essigsäure, zugesetzt wird.

8. Verwendung von Dämmstoffen nach Anspruch 1 als Füll-, Dämm-, Konstruktions- und/oder Isolationsmaterial im Bau- und Verpackungswesen.

## Claims

1. Insulating material based on waste material and fibrous raw materials, characterised by the fact that it is composed of
50-70 % chipped wood or grasses or shredded waste paper and/or shredded board containing 0 - 30 % textile, plant or inorganic fibres or chipped wood and shredded waste paper and/or shredded board containing 0 - 30 % textile, plant or inorganic fibres whereby chipped wood or grasses are present as products impregnated with milk-of-lime and water glass solution and of
20 - 50 % alkali silicate, in relation to the total mass of the insulating material, whereby the remainder consists of
0 - 30 % auxiliary agents, in relation to the total mass of the insulating material, and the insulating materials is expanded.

2. Insulating material as claimed in Claim 1 characterised by the fact that chipped wood waste or sawings or chipped windfall or chipped industrial timber waste or shredded bamboo or straw or mixtures of the aforementioned materials are used as chipped wood.

3. Insulating material as claimed in Claim 1 characterised by the fact that calcium oxide, cement, quartz powder, casein, dyes or milk-of-lime are used as auxiliary agents.

4. Insulating material as claimed in Claim 1 characterised by the fact that the textile, plant or inorganic fibres are between 10 and 30 mm in length and consist of shredded rags, straw, grasses or glass fibres.

5. Process for manufacturing insulating material as claimed in Claim 1 characterised by the fact that 50 - 70 % shredded waste paper and/or shredded board, in relation to the total mass of the finished product, including 0 - 30 % fibre content, is mixed with a water glass solution with a solids concentration between 20 and 50 %, in relation to the total mass of the finished product, to which mix auxiliary agents are added if necessary in accordance with its intended application in a proportion between 0 and 30 % of the total mass and the pourable mass thus produced is expanded using air and/or CO₂ and finally subjected to a drying process.

6. Process for manufacturing insulating material as claimed in Claim 1 characterised by the fact that
following the above process, finely chipped wood or finely chipped wood waste or sawings or finely chipped windfall or finely chipped industrial timber waste or finely shredded grasses (bamboo, straw) or mixtures of the aforementioned materials are predried, then subjected to a vacuum at between 50 and 90 °C and finally pressurised with a mix of milk-of-lime and water glass solution where the ratio of milk-of-lime to water glass solution ranges between 1:1 and 1:4 in relation to the solids concentration,
the moist mix thus created is mixed with a water glass solution either on its own or together with shredded waste paper and/or shredded board containing textile, plant or inorganic fibres and further auxiliary agents are added to this mix if necessary according to its intended application,
whereby the water glass solution in the treated shredded material is offset against the total amount of the water glass solution and the proportion of milk-of-lime is offset against the total amount of auxiliary agents are added to this mix if necessary according to its intended application,
and the pourable mass thus manufactured is expanded using air and/or CO₂ and finally subjected to a drying process.

7. Process for manufacturing insulating material as claimed in Claims 5 and 6 characterised by the fact that an organic acid, preferably acetic acid, is added directly to the foam or following shaping of the pourable mass or foam to accelerate hardening.

8. Use of insulating materials as claimed in Claim 1 as packing, insulating, construction and/or insulating material in the building and packaging industry.

## Revendications

1. Matériau isolant à base de matières premières de récupération et de matières premières fibreuses, caractérisé en ce qu'il est composé
de 50 à 70 % de bois broyé ou de graminées broyées ou de vieux papiers broyés et/ou de carton broyé avec une teneur de 0 à 30 % en fibres textiles, végétales ou minérales, ou de bois broyé et de vieux papiers broyés et/ou de carton broyé avec une teneur de 0 à 30 % en fibres textiles, végétales ou minérales, le bois broyé ou les graminées broyées étant présents sous forme de produits imprégnés de lait de chaux et de solution de verre soluble,
de 20 à 50 %, par rapport à la masse totale du matériau isolant, de silicate alcalin,
les 0 à 30 % restants, par rapport à la masse totale du matériau isolant, étant constitués de matériaux auxiliaires, et le matériau isolant étant transformé en mousse.

2. Matériau isolant selon la revendication 1, caractérisé en ce qu'on utilise comme bois broyé des déchets de bois broyés ou des copeaux de sciage ou des ventis broyés ou des déchets industriels de bois broyés ou des bambous broyés ou de la paille broyée ou des mélanges des matériaux précités.

3. Matériau isolant selon la revendication 1, caractérisé en ce qu'on utilise comme matériaux auxiliaires de l'oxyde de calcium, du ciment, de la poudre de quartz, de la caséine, des colorants ou du lait de chaux.

4. Matériau isolant selon la revendication 1, caractérisé en ce que les fibres textiles, végétales ou minérales présentent une longueur de 10 à 30 mm et sont constituées de chiffons broyés, de paille broyée, de graminées broyées ou de fibres de verre.

5. Procédé de fabrication de matériau isolant selon la revendication 1, caractérisé en ce que 50 à 70 %, par rapport à la masse totale du produit final, de vieux papiers broyés et/ou de carton broyé, présentant une teneur en fibres de 0 à 30 %, sont mélangés à une solution de verre soluble avec une teneur en matières solides de 20 à 50 % par rapport à la masse totale du produit final, les matériaux auxiliaires étant éventuellement ajoutés à ce mélange, conformément à l'utilisation prévue, avec une teneur de 0 à 30 % par rapport à la masse totale, et la masse coulante ainsi fabriquée étant transformée en mousse à l'aide d'air et/ou de CO₂, puis soumise à un processus de séchage.

6. Procédé de fabrication de matériau isolant selon la revendication 1, caractérisé en ce que du bois finement broyé ou des déchets de bois finement broyés ou des copeaux de sciage ou des ventis finement broyés ou des déchets industriels de bois finement broyés ou des graminées (bambous, paille) finement broyées, selon des procédés connus, ou des mélanges des matériaux précités sont préalablement séchés, puis exposés à un vide à une température de 50 à 90 °C, et ensuite mélangés sous pression à un mélange de lait de chaux et de solution de verre soluble avec un rapport, rapporté à la teneur en matières solides, du lait de chaux à la solution de verre soluble de 1:1 à 1:4,
le mélange humide ainsi obtenu étant mélangé, soit seul, soit en mélange avec des vieux papiers broyés et/ou du carton broyé présentant une teneur en fibres textiles, végétales ou minérales à une solution de verre soluble, et des matériaux auxiliaires supplémentaires étant éventuellement ajoutés à ce mélange, conformément à l'utilisation prévue,
la solution de verre soluble contenue dans le matériau broyé traité étant imputée sur la teneur totale en solution de verre soluble et la part de lait de chaux sur la teneur totale en matériaux auxiliaires du produit final, rapportée chaque fois à la teneur en matières solides des deux composants,
et la masse coulante ainsi fabriquée étant transformée en mousse à l'aide d'air et/ou de CO₂, puis soumise à un processus de séchage.

7. Procédé de fabrication de matériau isolant selon les revendications 5 et 6, caractérisé en ce qu'afin d'accélérer le durcissement, on ajoute un acide organique, de préférence de l'acide acétique, directement à la mousse, ou à la suite du démoulage de la masse coulante ou de la mousse.

8. Utilisation de matériaux isolants selon la revendication 1 comme matériau de remplissage, matériau calorifuge, matériau de construction et/ou matériau d'isolation dans le domaine du bâtiment et de l'emballage.
